# EUROPEAN PATENT APPLICATION

(11) **EP 3 451 472 A1**
(43) Date of publication of application: **06.03.2019**
(21) Application number: 17789121.5
(22) Date of filing: 16.03.2017
(51) Int. Cl.: H01T 4/12

(54) **SURGE PROTECTION ELEMENT**

(30) Priority: 26.04.2016 JP 2016087679
(71) Applicant: Mitsubishi Materials Corporation, Chiyoda-ku Tokyo 100-8117 (JP)
(72) Inventor: MAYUZUMI, Yoshitaka, Naka-shi Ibaraki 311-0102 (JP); SUGIMOTO, Ryoichi, Naka-shi Ibaraki 311-0102 (JP); SAKAI, Shinji, Naka-shi Ibaraki 311-0102 (JP)
(74) Representative: Hoffmann Eitle
(86) International application number: PCT/JP2017/010723
(87) International publication number: WO 2017/187832

(57) **Abstract**

A surge protective device of the present invention includes an insulating tube 2, a pair of sealing electrodes 3 for closing openings on both ends of the insulating tube so as to seal a discharge control gas inside the tube, wherein the pair of sealing electrodes has a pair of convex electrode portions 5 projecting inwardly so as to face to each other, and at least one projecting part 2a projecting inwardly in a radial direction and extending in a circumferential direction is formed on the inner circumferential surface of the insulating tube.

## Description

### BACKGROUND OF THE INVENTION

### [Field of the Invention]

The present invention relates to a surge protective device for protecting a wide variety of equipment from surges caused by a lightning strike or the like so as to prevent accidents.

### [Description of the Related Art]

The connecting parts of telephones, facsimile machines, and electronic devices for communication equipment such as a modem to communication lines, and power lines, antenna, as well as image display driving circuits for CRTs, liquid crystal display TVs, plasma display TVs, and the like are vulnerable to electric shocks such as abnormal voltage (surge voltage) due to a lightning surge or electrostatic surge. To these parts are installed surge protective devices in order to prevent electronic devices and the printed circuit boards equipped therewith from being broken down due to thermal damage, ignition, or the like caused by abnormal voltage.

As conventional technologies, Patent documents 1 and 2, for example, disclose an arrester (surge protective device) which includes an insulating tube being a cylindrical body made of ceramic, glass, or the like, and a pair of convex electrode portions projecting from a pair of sealing electrodes for sealing the insulating tube so as to face to each other.

### [Prior Art Documents]

### [Patent Documents]

[Patent Document 1] Japanese Utility Model Registration No. 3151069
[Patent Document 2] Japanese Unexamined Patent Application Publication H05-36460

### SUMMARY OF THE INVENTION

### [Problems to be solved by the Invention]

The following problems still remain in the conventional technologies described above.

Specifically, a metal constituting the convex electrode portions can be melt and scattered by an arc discharge and then the metal component can adhere to the inner surface of the insulating tube, which may deteriorate the insulation between the pair of sealing electrodes. In particular, when a surge application current is greater than 10 kA, a metal can scatter remarkably. And then, when a large amount of metal component adheres to the inner surface of the insulating tube, an energization circuit may be formed on the inner circumferential surface of the insulating tube, thereby causing a short circuit. In such a case, this surge protective device may be mistakenly considered to end its operating life.

The present invention has been made in view of the aforementioned circumstances, and an object of the present invention is to provide a surge protective device that can suppress the occurrence of a short circuit due to the adhesion of a metal component scattered by an arc discharge.

### [Means for Solving the Problems]

The present invention adopts the following configuration in order to overcome the aforementioned problems. Specifically, a surge protective device according to a first aspect of the present invention, comprises: an insulating tube and a pair of sealing electrodes for closing openings on both ends of the insulating tube so as to seal a discharge control gas inside the tube; wherein the pair of sealing electrodes has a pair of convex electrode portions projecting inwardly so as to face to each other, and at least one projecting part projecting inwardly in a radial direction and extending in a circumferential direction is formed on the inner circumferential surface of the insulating tube.

Specifically, in this surge protective device, since at least one projecting part projecting inwardly in a radial direction and extending in a circumferential direction is formed on the inner circumferential surface of the insulating tube, a metal component scattered by an arc discharge is hard to adhere to the region shaded by the projecting part. Hence, an energization circuit is hard to be formed due to the adhered metal, and thus the occurrence of a short circuit can be suppressed. In addition, the projecting part can lengthen the creepage distance between the sealing electrodes through the inner circumferential surface of the insulating tube, and this can also preclude the formation of an energization circuit due to the adhered metal.

A surge protective device according to a second aspect of the present invention is characterized by the surge protective device according to the first aspect, wherein a plurality of the projecting parts are formed in the axial direction of the insulating tube.

Specifically, in this surge protective device, since the plurality of projecting parts are formed in the axial direction of the insulating tube, the formation of an energization circuit due to the adhered metal can be suppressed by the plurality of projecting parts, which can further prevent the occurrence of a short circuit.

A surge protective device according to a third aspect of the present invention is characterized by the surge protective device according to the first or second aspect, wherein the projecting part is formed at least in the vicinity of one of the openings of the insulating tube.

Specifically, in this surge protective device, since the projecting part is formed at least in the vicinity of one of the openings of the insulating tube, the projecting part can be located in the vicinity of one of the openings to which a metal component due to arc discharge is harder to adhere than to the central region. Therefore, the occurrence of a short circuit between the pair of sealing electrodes can be effectively prevented.

A surge protective device according to a fourth aspect of the present invention is characterized by the surge protective device according to any one of the first to third aspects, wherein a groove part extending in a circumferential direction is formed on the inner circumferential surface of the insulating tube, and the groove part is arranged in proximity to the outward surface of the projecting part.

Specifically, in this surge protective device, since the groove part is arranged in proximity to the outward surface of the projecting part, the groove part is shaded by the projecting part. Hence, a metal component is hard to enter the groove part, and thus the formation of an energization circuit can be further suppressed. In addition, since both of the projecting part and the groove part can further lengthen the creepage distance between the sealing electrodes through the inner circumferential surface of the insulating tube, an energization circuit can be hard to be formed.

### [Effects of the Invention]

According to the present invention, the following effects may be provided.

Specifically, according to the surge protective device of the present invention, since at least one projecting part projecting inwardly in a radial direction and extending in a circumferential direction is formed on the inner circumferential surface of the insulating tube, even when a metal component scattered by an arc discharge adheres to the inner circumferential surface of the insulating tube, it is hard to adhere to the region shaded by the projecting part. Hence, an energization circuit is hard to be formed due to the adhered metal, and thus the occurrence of a short circuit can be suppressed.

Therefore, the surge protective device of the present invention can achieve a long operating life, and the number of surge application by which the element can operate can be increased. In particular, the surge protective device of the present invention is suitable for the power source and communication equipment for infrastructure (railroad-related or regenerated energy-related (e.g., solar cell, wind power generation, and the like)) where the tolerance to a large current surge is required.

### BRIEF DESCRIPTION OF THE DRAWINGS

FIG. 1 is an axial cross-sectional view showing a surge protective device according to a first embodiment of the present invention.
FIG. 2 is a cross-sectional view along line A-A in FIG. 1.
FIG. 3 is an axial cross-sectional view showing a surge protective device according to a second embodiment of the present invention.
FIG. 4 is an enlarged cross-sectional view showing the essential part of the surge protective device according to the second embodiment.

### DESCRIPTION OF THE EMBODIMENTS

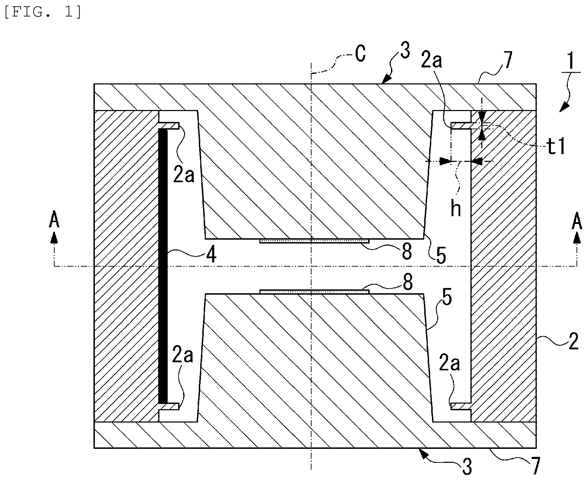

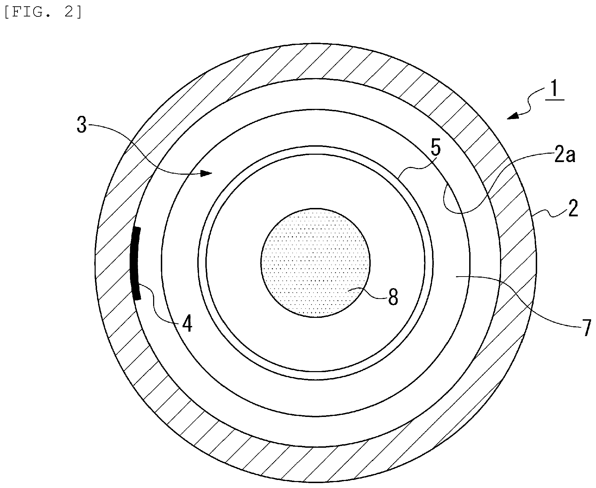

Hereinafter, a surge protective device according to a first embodiment of the present invention will be described with reference to FIGs. 1 and 2. In the drawings referenced in the following description, the scale of each component may be changed as appropriate so that each component is recognizable or is readily recognized.

As shown in FIGs. 1 and 2, a surge protective device 1 according to the present embodiment includes an insulating tube 2 and a pair of sealing electrodes 3 for closing the openings on both ends of the insulating tube 2 so as to seal a discharge control gas inside the tube.

The surge protective device 1 according to the present embodiment also includes a discharge-assisting part 4 made of an ion-source material on the inner circumferential surface of an insulating tube 2.

The pair of sealing electrodes 3 has a pair of convex electrode portions 5 projecting inwardly so as to face to each other.

On the inner circumferential surface of the insulating tube 2 is formed at least one projecting part 2a projecting inwardly in a radial direction and extending in a circumferential direction. In the present embodiment, a pair of the projecting parts 2a is provided at intervals from each other in the direction of an axis C of the insulating tube 2 in the vicinity of the openings on both ends of the insulating tube 2.

The projecting parts 2a are annularly formed in a circumferential direction around the axis C. In addition, the projecting parts 2a are set to have a projection amount h so as not to make contact with the convex electrode portions 5 opposing thereto. Note that the projection amount h and a width t1 of the projecting parts 2a are set depending on the installation position of the projecting parts 2a or the like.

These projecting parts 2a are fabricated by forming a plurality of annular projecting parts on the inner circumferential surface of the insulating tube 2 when the insulating tube 2 is fabricated, for example when the insulating tube 2 is molded but before it is sintered, and then by sintering them. They can also be fabricated by prefabricating projecting parts having a ring or arc shape and then inserting them into grooves formed on the inner circumferential surface of the insulating tube 2.

Note that the larger the projection amount h of the projecting parts 2a is, the more the formation of an energization circuit due to the adhesion of a metal component can be suppressed.

On the opposing surfaces of the convex electrode portions 5 are formed discharge active layers 8 with a material having higher electron emission characteristics than that of the sealing electrodes 3.

The discharge active layers 8 include, for example, Si and O as the main component elements together with at least one of Na, Cs, and C. These discharge active layers 8 are fabricated by adding a cesium carbonate powder to a sodium silicate solution to form a precursor, applying the precursor on the opposing surfaces of the pair of convex electrode portions 5, and then subjecting the applied precursor to a heat treatment at a temperature or higher at which sodium silicate softens and at a temperature or higher cesium carbonate melts and decomposes.

The discharge-assisting part 4 is made of a conductive material such as, for example, a carbon material.

In addition, in the present embodiment, the discharge-assisting part 4 is formed into a straight or dashed line shape along the axis C. This discharge-assisting part 4 is formed between the pair of projecting parts 2a.

Note that, although one piece of the discharge-assisting part 4 is shown along the axis C in FIG. 1, a plurality of the discharge-assisting parts 4 may be formed at intervals from each other in a circumferential direction.

The sealing electrodes 3 are composed of, for example, 42-alloy (Fe: 58 wt%, Ni: 42 wt%), Cu, or the like.

Each of the sealing electrodes 3 has a discoidal flange 7 fixed to each of the openings on both ends of the insulating tube 2 with a conductive fusion material (not shown) in a close contact state by a heat treatment. Inside the flange 7, the convex electrode portion 5 having a columnar shape is integrally formed with the flange 7, which projects inwardly and has a smaller outer diameter than the inner diameter of the insulating tube 2.

The insulating tube 2 is made of a crystalline ceramic material such as alumina. However, the insulating tube 2 may be a tube made of a glass such as a lead glass.

The conductive fusion material described above is a brazing material containing Ag, e.g., an Ag-Cu brazing material.

The discharge control gas sealed inside the insulating tube 2 as described above is an inert gas or the like such as, for example, He, Ar, Ne, Xe, Kr, SF₆, CO₂, C₃F₈, C₂F₆, CF₄, H₂, air, etc., or a combination of these gases.

When an overvoltage or overcurrent enters the surge protective device 1, firstly the initial discharge occurs between the discharge-assisting part 4 and the convex electrode portions 5, which triggers further progress of discharge, and then an arc discharge occurs from one of the convex electrode portions 5 to the other of the convex electrode portions 5.

As described above, in the surge protective device 1 according to the present embodiment, since at least one projecting part 2a projecting inwardly in a radial direction and extending in a circumferential direction is formed on the inner circumferential surface of the insulating tube 2, a metal component scattered by an arc discharge is hard to adhere to the region shaded by the projecting part 2a. Hence, an energization circuit is hard to be formed due to the adhered metal, and thus the occurrence of a short circuit can be suppressed.

In addition, the projecting part 2a can lengthen the creepage distance between the sealing electrodes 3 through the inner circumferential surface of the insulating tube 2, and this can also preclude the formation of an energization circuit due to the adhered metal.

In particular, since the plurality of projecting parts 2a are formed in the axial direction of the insulating tube 2, the formation of an energization circuit due to the adhered metal can be suppressed by the plurality of projecting parts 2a, which can further prevent the occurrence of a short circuit.

Furthermore, since the projecting parts 2a are formed at least in the vicinity of the openings of the insulating tube 2, the projecting parts 2a can be located in the vicinity of the openings to which a metal component due to arc discharge is harder to adhere than to the central region. Hence, the occurrence of a short circuit between the pair of sealing electrodes 3 can be effectively prevented.

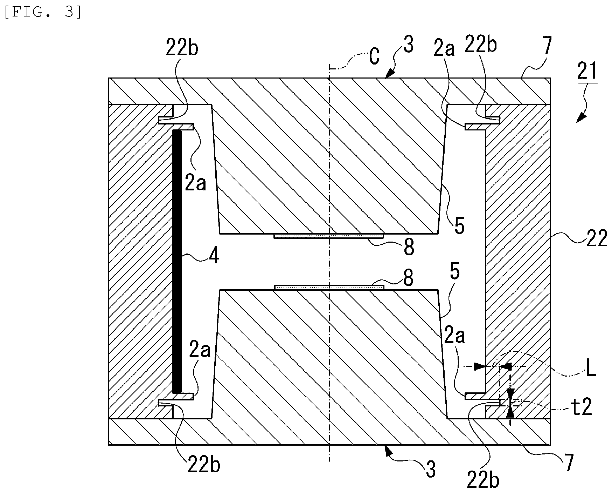

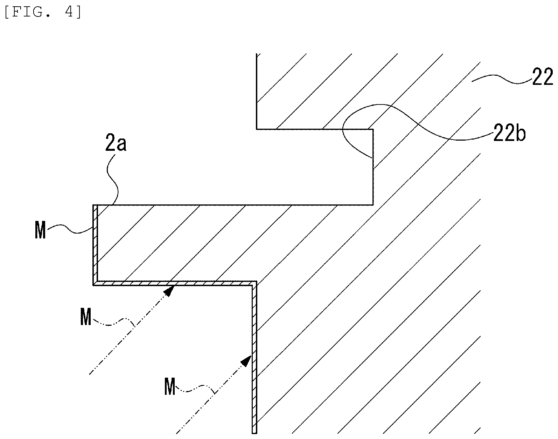

Next, a surge protective device according to a second embodiment of the present invention will be described below with reference to FIGs. 3 and 4. Note that, in the following description of the second embodiment, the same components as those in the first embodiment described above are denoted by the same reference numerals, and thus the description thereof is omitted.

The second embodiment is different from the first embodiment in the following points. In the first embodiment, only the projecting parts 2a are formed on the inner circumferential surface of the insulating tube 2, whereas in a surge protective device 21 according to the second embodiment, as shown in FIGs. 3 and 4, not only the projecting parts 2a but also groove parts 22b are formed on the inner circumferential surface of the insulating tube 22.

In this second embodiment, the groove parts 22b extending in a circumferential direction are formed on the inner circumferential surface of the insulating tube 22, and the groove parts 22b are arranged in proximity to the outward surface of the projecting parts 2a. Specifically, the groove parts 22b are provided adjacent to not the surface facing inwardly but the surface facing outwardly (i.e., the surface closer to the pair of openings of the insulating tube 22) of both surfaces of the projecting part 2a.

Each of the groove parts 22b is formed by making a slit in the inner circumferential surface of the insulating tube 22 in a vertical direction relative thereto so as to have a rectangular shape. Note that the larger a depth L of the groove part 22b is, the more the formation of an energization circuit due to the adhesion of a metal component inside the groove part 22b can be suppressed. In addition, a width t2 of the groove part 22b is set depending on the projection amount h of the projecting part 2a adjacent thereto, the installation position, or the like.

In addition, each of the groove parts 22b is annularly formed in a circumferential direction around the axis C.

These groove parts 22b are fabricated by forming a plurality of grooves having a slit-like shape on the inner circumferential surface of the insulating tube 22 when the insulating tube 22 is fabricated, for example when the insulating tube 22 is molded but before it is sintered, and then by sintering them.

As described above, in the surge protective device 21 according to the second embodiment, since the groove parts 22b are arranged in proximity to the outward surface of the projecting parts 2a, the groove parts 22b can be shaded by the projecting parts 2a. Hence, a metal component can be hard to enter the groove parts 22b, and thus the formation of an energization circuit can be further suppressed.

Specifically, even when a metal component M scattered from the tip side of the pair of convex electrode portions 5 by an arc discharge tries to adhere to the inside of the groove parts 22b, it is hard to adhere to the inside of the groove parts 22b shaded by the projecting parts 2a in the direction to which the metal component M scatters (e.g., the direction shown by the arrow in FIG. 4). Therefore, an energization circuit can be further hard to be formed due to the adhered metal component M.

In addition, since both of the projecting parts 2a and the groove parts 22b can lengthen the creepage distance between the sealing electrodes 3 through the inner circumferential surface of the insulating tube 22, an energization circuit can be hard to be formed.

The technical scope of the present invention is not limited to the aforementioned embodiments, but the present invention may be modified in various ways without departing from the scope or teaching of the present invention.

For example, in each embodiment described above, although the projecting parts and the groove parts are annularly formed along the inner circumferential surface of the insulating tube, they may be formed in an arc shape along the inner circumferential surface of the insulating tube.

In addition, although the projecting parts described above project with the cross-section thereof being a rectangular shape, the cross-section may have another shape. For example, the projecting part may project with the cross-section thereof being a triangular shape.

### [Reference Numerals]

1, 21: surge protective device, 2, 22: insulating tube, 3: sealing electrode, 4: discharge-assisting part, 5: convex electrode portion, 2a: projecting part, 22b: groove part

## Claims

1. A surge protective device comprising:
an insulating tube; and
a pair of sealing electrodes for closing openings on both ends of the insulating tube so as to seal a discharge control gas inside the tube, wherein
the pair of sealing electrodes has a pair of convex electrode portions projecting inwardly so as to face to each other, and
at least one projecting part projecting inwardly in a radial direction and extending in a circumferential direction is formed on the inner circumferential surface of the insulating tube.

2. The surge protective device according to claim 1, wherein a plurality of the projecting parts are formed in the axial direction of the insulating tube.

3. The surge protective device according to claim 1, wherein the projecting part is formed at least in the vicinity of one of the openings of the insulating tube.

4. The surge protective device according to claim 1, wherein
a groove part extending in a circumferential direction is formed on the inner circumferential surface of the insulating tube, and
the groove part is arranged in proximity to the outward surface of the projecting part.
